# EUROPEAN PATENT APPLICATION

(11) **EP 4 507 347 A1**
(43) Date of publication of application: **12.02.2025**
(21) Application number: 23784271.1
(22) Date of filing: 04.04.2023
(51) Int. Cl.: H04W 8/14

(54) **INFORMATION REPORTING METHOD AND APPARATUS, TERMINAL AND NETWORK SIDE DEVICE**

(30) Priority: 08.04.2022 CN 202210369326
(71) Applicant: VIVO MOBILE COMMUNICATION CO., LTD., Dongguan, Guangdong 523863 (CN)
(72) Inventor: HE, Ranran, Dongguan, Guangdong 523863 (CN); ZHANG, Yanxia, Dongguan, Guangdong 523863 (CN); BAO, Wei, Dongguan, Guangdong 523863 (CN)
(74) Representative: Lavoix
(86) International application number: PCT/CN2023/086201
(87) International publication number: WO 2023/193708

(57) **Abstract**

This application discloses an information reporting method and apparatus, a terminal, and a network-side device, pertaining to the field of communication technologies. The information reporting method in embodiments of this application includes: obtaining, by a terminal, target configuration information, where the target configuration information is used to indicate reporting cell global identifier CGI information of a target cell; and reporting, by the terminal, target information based on at least one of the following: a network type of the target cell; system message scheduling information of the target cell; and a capability of the terminal; where the target information is used to indicate related information of the target cell.

## Description

### CROSS-REFERENCE TO RELATED APPLICATIONS

This application claims priority to Chinese Patent Application No. 202210369326.6, filed in China on April 8, 2022, which is incorporated herein by reference in its entirety.

### TECHNICAL FIELD

This application pertains to the field of communication technologies, and specifically, relates to an information reporting method and apparatus, a terminal, and a network-side device.

### BACKGROUND

Non-terrestrial networks (Non-Terrestrial Networks, NTN) are introduced into related technologies. A terrestrial network may configure a terminal to report cell global identifier (Cell Global Identifier, CGI) information of a non-terrestrial network cell (cell), so as to implement neighboring cell relation management. 5G NodeBs (the next generation Node B, gNB) cannot identify a network type of the cell as NTN, which may lead to incorrect neighboring cell relation management by the gNB.

### SUMMARY

Embodiments of this application provide an information reporting method and apparatus, a terminal, and a network-side device, which can improve accuracy of neighboring cell relation management by a base station.

According to a first aspect, an information reporting method is provided, including:
obtaining, by a terminal, target configuration information, where the target configuration information is used to indicate reporting cell global identifier CGI information of a target cell; and
reporting, by the terminal, target information based on at least one of the following:
   a network type of the target cell;
   system message scheduling information of the target cell; and
   a capability of the terminal; where
   the target information is used to indicate related information of the target cell.

According to a second aspect, an information reporting apparatus is provided, including:
an obtaining module, configured to obtain target configuration information, where the target configuration information is used to indicate reporting cell global identifier CGI information of a target cell; and
a reporting module, configured to report target information based on at least one of the following:
   a network type of the target cell;
   system message scheduling information of the target cell; and
   a capability of the terminal; where
   the target information is used to indicate related information of the target cell.

According to a third aspect, an information reporting method is provided, including:
sending, by a network-side device, target configuration information to a terminal, where the target configuration information is used to indicate reporting cell global identifier CGI information of a target cell; and
receiving, by the network-side device, target information reported by the terminal, where the target information is used to indicate related information of the target cell.

According to a fourth aspect, an information reporting apparatus is provided, including:
a sending module, configured to send target configuration information to a terminal, where the target configuration information is used to indicate reporting cell global identifier CGI information of a target cell; and
a receiving module, configured to receive target information reported by the terminal, where the target information is used to indicate related information of the target cell.

According to a fifth aspect, a terminal is provided, where the terminal includes a processor and a memory, and a program or instruction capable of running on the processor is stored in the memory. When the program or instruction is executed by the processor, the steps of the method according to the first aspect are implemented.

According to a sixth aspect, a terminal is provided, including a processor and a communication interface, where the communication interface is configured to obtain target configuration information, where the target configuration information is used to indicate reporting cell global identifier CGI information of a target cell; and report target information based on at least one of the following:
a network type of the target cell;
system message scheduling information of the target cell; and
a capability of the terminal; where
the target information is used to indicate related information of the target cell.

According to a seventh aspect, a network-side device is provided, where the network-side device includes a processor and a memory, and a program or instruction capable of running on the processor is stored in the memory. When the program or instruction is executed by the processor, the steps of the method according to the third aspect are implemented.

According to an eighth aspect, a network-side device is provided, including a processor and a communication interface, where the communication interface is configured to: send target configuration information to a terminal, where the target configuration information is used to indicate reporting cell global identifier CGI information of a target cell; and receive target information reported by the terminal, where the target information is used to indicate related information of the target cell.

According to a ninth aspect, an information reporting system is provided, including: a network-side device and a terminal, where the terminal may be configured to perform the steps of the information reporting method according to the first aspect, and the network-side device may be configured to perform the steps of the information reporting method according to the third aspect.

According to a tenth aspect, a readable storage medium is provided, where a program or instruction is stored in the readable storage medium, and when the program or instruction is executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or instruction to implement the method according to the first aspect or implement the method according to the third aspect.

According to a twelfth aspect, a computer program/program product is provided, where the computer program/program product is stored in a storage medium, and the computer program/program product is executed by at least one processor to implement the steps of the information reporting method according to the first aspect or the steps of the information reporting method according to the third aspect.

In the embodiments of this application, the terminal can report the related information of the target cell to the network-side device based on the network type of the target cell, the system message scheduling information of the target cell, and the capability of the terminal. In this way, if the terrestrial network configures the terminal to report CGI information of an NTN cell to implement neighboring cell management, the terminal may not report the CGI information of the target cell or indicates that the target cell on the network side is an NTN cell, thereby improving accuracy of managing a neighboring cell relation by the base station.

### BRIEF DESCRIPTION OF DRAWINGS

FIG. 1 is a block diagram of a wireless communication system to which the embodiments of this application are applicable;
FIG. 2 is a schematic flowchart of an information reporting method on a terminal side according to an embodiment of this application;
FIG. 3 is a schematic flowchart of an information reporting method on a network-side device side according to an embodiment of this application;
FIG. 4 is a schematic structural diagram of an information reporting apparatus on a terminal side according to an embodiment of this application;
FIG. 5 is a schematic structural diagram of an information reporting apparatus on a network-side device side according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

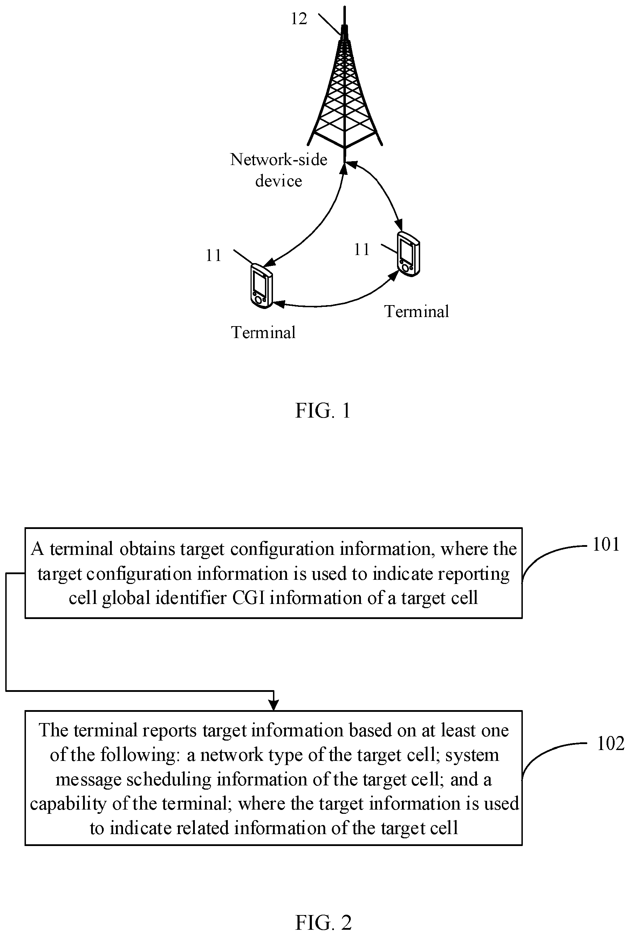

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device, WD), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wrist band, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Non-terrestrial network (Non-Terrestrial Networks, NTN) is a network or network segment that uses satellite or an unmanned Aircraft System (Unmanned Aircraft System, UAS) platform for transmission. Compared with the terrestrial communication system, a satellite-based non-terrestrial communication system has a wider coverage, with typical applicable scenarios including cases that ground base stations cannot be built and ground base stations are damaged, such as continuous coverage in remote mountainous areas, deserts, oceans, and forests, or emergency communication when ground base stations are damaged in the event of natural disaster.

Satellites include low earth orbiting (Low Earth Orbiting, LEO) satellites, medium earth orbiting (Medium Earth Orbiting, MEO) satellites, geostationary earth orbiting (Geostationary Earth Orbiting, GEO) satellites, and highly elliptical orbiting (Highly Elliptical Orbiting, HEO) satellites.

Typical scenarios of non-terrestrial networks include transparent forwarding (that is, the satellite serves as a forwarding relay) and signal regeneration (that is, the satellite directly serves as a base station). For transparent forwarding, a link between a satellite and a terminal is a service link, and a link between the satellite and a ground base station is a feedback link.

Automatic neighbor relation (Automatic Neighbour Relation, ANR) can reduce the burden of operators to manually manage association of neighboring cells to some extent through automatic association of neighboring cells.

The ANR function is used in gNBs to manage a neighboring cell relation table (Neighbour Cell Relation Table, NCRT). The ANR includes neighboring cell detection function. Based on this function, the gNB can detect new neighboring cells and add them to the NCRT. The ANR also includes a neighboring cell relation removal function. Based on this function, the gNB can delete an overdue neighboring cell relation.

If a source cell has a neighboring cell relation (Neighbour Cell Relation, NCR) from the source cell to a target cell, it means that a base station of the source cell:
a. knowing global and physical identifiers (Identity Documents, IDs) of the target cell (for example, NR cell global identifier (Cell Global Identifier, CGI)/NR physical cell identifier (Physical Cell Identifier, PCI) or evolved universal mobile telecommunications system (Universal Mobile Telecommunications System, UMTS) terrestrial radio access network cell global identifier (E-UTRAN Cell Global Identifier, ECGI)/PCI);
b. one entry in the NCRT is used for identifying the target cell by the source cell; and
c. this NCRT has an attribute of defining or setting an operation administration and maintenance (Operation Administration and Maintenance, OAM) to be a default value.

The ANR function also allows the OAM to manage the NCRT. The OAM may add and delete NCRs, or may change an attribute of the NCRT. When the NCRT is changed, the OAM needs to be notified.

In a radio resource control (Radio Resource Control, RRC) connected state, an NG-radio access network (Radio Access Network, RAN) node indicates each UE to perform measurement on neighboring cells, and the NG-RAN may configure different measurement methods for the UEs and when to report. The ANR procedure is as follows:

The UE sends a measurement report of cell B, which includes a PCI of the cell B, but does not include its NR cell global identifier (NCGI)/ECGI.

When receiving a measurement report of the UE containing a PCI, the NG-RAN node may use the following steps:

Step 1: The NG-RAN node indicates the UE to use a newly discovered PCI as a parameter to read all broadcast NCGIs/ECGIs, tracking area codes (Tracking Area Code, TAC), RAN-based notification area codes (RAN-based Notification Area Code, RANAC), public land mobile network (Public Land Mobile Network, PLMN) IDs, and NR frequency bands (for neighboring NR cells). To enable the UE to read the above information, the NG-RAN node may need to allocate an appropriate idle period so that the UE can read NCGIs/ECGIs from the detected broadcast channels of neighboring cells.

Step 2: When the UE reads an NCGI/ECGI of a new cell, the UE reports the read information to the NG-RAN node of the serving cell, including a broadcast NCGI/ECGI, tracking area code, RANAC, PLMN ID, and NR frequency band (for a case that the neighboring cell is an NR cell). If the detected NR cell does not broadcast system information block (System Information Block, SIB)1, the UE reports noSIB1 indication information.

Step 3: The NG-RAN node determines to increase a neighboring cell relation and uses the PCI and NCGI/ECGI to:
check a transport layer address of the new NG-RAN node;
update a new neighboring cell relation list; and
if necessary, establish an Xn interface to the NG-RAN node of the neighboring cell.

The related technology introduces non-terrestrial network, and the terrestrial network may configure the UE to report CGI information of an NTN cell to implement neighboring cell relation management. The gNB cannot identify the cell as an NTN cell, which may lead to incorrect neighboring cell relation management by the gNB.

The following describes in detail an information reporting method provided in the embodiments of this application by using some embodiments and application scenarios thereof with reference to the accompanying drawings.

An embodiment of this application provides an information reporting method, as shown in FIG. 2, including:

Step 101: A terminal obtains target configuration information, where the target configuration information is used to indicate reporting cell global identifier CGI information of a target cell.

Step 102: The terminal reports target information based on at least one of the following:
a network type of the target cell;
system message scheduling information of the target cell; and
a capability of the terminal; where
the target information is used to indicate related information of the target cell.

In this embodiment of this application, the terminal can report the related information of the target cell to the network-side device based on the network type of the target cell, the system message scheduling information of the target cell, and the capability of the terminal. In this way, if the terrestrial network configures the terminal to report CGI information of an NTN cell to implement neighboring cell management, the terminal may not report the CGI information of the target cell, or indicates that the target cell on the network side is an NTN cell, or indicates that the target cell on the network side prohibits access of a terminal only supporting terrestrial network (Terrestrial Networks, TN) access, thereby improving accuracy of managing a neighboring cell relation by the base station.

The terminal may report the target information to the network-side device through a dedicated message, or report the target information to the network-side device through a measurement result, that is, the target information is carried in a measurement result reported by the terminal, thereby reducing transmission resources.

In some embodiments, step 101 may be understood as that the network side can configure a measurement identifier for one or more cells (CG(s)) by using a report configuration (for example, setting a report type reportType to be a report CGI reportCGI). Therefore, the terminal can obtain a corresponding measurement identifier and/or CGI information by obtaining the target configuration information.

In some embodiments, the capability of the terminal may be used to indicate whether the terminal supports NR NTN access, and if the terminal indicates such a capability, the terminal can provide NTN features including at least one of the following:
timer extension (timer extension) of a MAC/RLC/PDCP layer;
RACH adaptation to handle long RTT (RACH adaptation to handle long RTT); and
obtaining an NTN specific SIB and more than one TACs per PLMN broadcast in one cell (acquiring NTN specific SIB and more than one TAC per PLMN broadcast in one cell).

In some embodiments, the target information may include at least one of the following: first specific indication information (for example, cellForWhichToReportCGI), where the first specific indication information indicates whether the cell is an NR cell; and
second specific indication information (for example, plmn-IdentityInfoList), where the second specific indication information may include CGI information of the target cell, and the plmn-IdentityInfoList may include at least one of plmn-IdentityList, trackingAreaCode, trackingAreaList, ranac, cellIdentity, and cellReservedForOperatorUse for each entry of the plmn-IdentityInfoList.

In some embodiments, the second specific indication information may further include a frequency band list (frequencyBandList).

In some embodiments, plmn-IdentityInfoList may include at least one plmn-IdentityInfo, and if a base station identifier length (gNB-ID-Length) is included in broadcast content, the second specific indication information may include gNB-ID-Length.

In some embodiments, the target information includes at least one of the following:
first information, where the first information includes first CGI information and/or second CGI information of the target cell, the first CGI information may be CGI information unique to a non-terrestrial network NTN cell, such as a tracking area code list trackingAreaCodeList, and the second CGI information may be other CGI information than the first CGI information;
second information, where the second information is used to indicate access control information of the target cell and/or the network type of the target cell; and
third information, where the third information is used to indicate the network type of the target cell and/or a cause for not reporting the CGI information.

In this embodiment, the terminal may report the first information to the network-side device, or report the second information to the network-side device, or report the first information and the second information to the network-side device, or report the third information to the network-side device, or report the first information and the third information to the network-side device. During reporting of the first information, the first CGI information or the second CGI information may not be included, which can improve the accuracy of neighboring cell relation management for the terrestrial network.

Certainly, the terminal may not report the first information, the second information, or the third information to the network-side device, that is, may not report all of the first information, the second information and the third information.

In some embodiments, the capability of the terminal includes at least one of the following:
supporting non-terrestrial network NTN access, and not supporting to obtain and report NTN-related CGI information;
supporting NTN access, and supporting to obtain and report NTN-related CGI information;
supporting terrestrial network TN access, and not supporting to obtain and report NTN-related CGI information; and
supporting TN access, and supporting to obtain and report NTN-related CGI information.
the supporting to obtain and report the NTN-related CGI information includes: the terminal supports to obtain NTN-related CGI information from an intra-frequency neighboring cell or inter-frequency neighboring cell and report the obtained NTN-related CGI information; or
the not supporting to obtain and report the NTN-related CGI information includes: the terminal does not support to obtain NTN-related CGI information from an intra-frequency neighboring cell or inter-frequency neighboring cell and report the obtained NTN-related CGI information; where
a network type of the intra-frequency neighboring cell is NTN, a network type of the inter-frequency neighboring cell is NTN, and the terminal obtains the NTN-related CGI information by reading a system message of the neighboring cell.

In some embodiments, the target information reported by the terminal includes at least one of the following:
in a case that the terminal detects the network type of the target cell being NTN, the target information does not include the first CGI information or the second CGI information, or the target information does not include the first CGI information; that is, in a case that the network type of the target cell is NTN, the first CGI information is not reported to the network-side device;
in a case that the terminal detects the system message scheduling information of the target cell including scheduling of a first system message, the target information does not include the first CGI information or the second CGI information, or the target information does not include the first CGI information; where a system information block SIB1 of the target cell includes the system message scheduling information, and the first system message includes satellite assistance information; where in a case that the system information block SIB1 of the target cell including scheduling of a first system message is detected, it can be determined that the type of the target cell is NTN, and the first CGI information is not reported to the network-side device; and
in a case that the terminal supports to obtain and report NTN-related CGI information and the terminal obtains the first CGI information, the target information includes the first CGI information, or the target information includes the first CGI information and the second CGI information. In a case that the terminal supports to obtain and report the NTN-related CGI information, the first CGI information may be reported to the network-side device, so that the network-side device can learn about the NTN-related CGI information.

In some embodiments, in a case that the terminal supports to obtain and report CGI information, the target information includes the second CGI information.

In some embodiments, in a case that the terminal detects the network type of the target cell being NTN, or the terminal detects the system message scheduling information of the target cell including the scheduling of the first system message, the target information includes the second information or the third information, and the first system message includes satellite assistance information. That is, in a case that the network type of the target cell is NTN, the second information or the third information may be reported to the network-side device, so that the network-side device can learn the network type of the target cell or learn the access control information of the target cell, or learn the cause for not reporting the first CGI information, which can improve the accuracy of the neighboring cell relation management for the terrestrial network.

In some embodiments, in a case that the terminal supports to obtain and report the NTN-related CGI information and the terminal obtains the first CGI information, the target information may include the second information.

In some embodiments, in a case that the terminal supports to obtain and report CGI information, the target information may include the second information.

In some embodiments, the terminal detecting the network type of the target cell includes at least one of the following:
in a case that the system message scheduling information of the target cell does not include the scheduling of the first system message, determining that the network type of the target cell is TN; where the system information block SIB 1 of the target cell includes the system message scheduling information, and the first system message includes the satellite assistance information;
in a case that the system message scheduling information of the target cell includes the scheduling of the first system message, determining that the network type of the target cell is NTN; where the system information block SIB 1 of the target cell includes the system message scheduling information, and the first system message includes the satellite assistance information;
in a case that the target cell broadcasts the first CGI information, determining that the network type of the target cell is NTN; and
in a case that the target cell broadcasts first access control information, determining that the network type of the target cell is NTN, where the first access control information is used to indicate that the first terminal is allowed or not allowed to access the target cell, and the first terminal is a terminal supporting NTN access.

In some specific embodiments, the terminal detects the network type of the target cell being NTN, and the terminal does not report the first information. This embodiment includes the following steps:
Step 1: The terminal obtains target configuration information sent by a current base station, where the target configuration information is used to indicate the terminal to report CGI information of the target cell;
   for example, for a specific measurement ID (measId) in a measurement configuration variable (VarMeasConfig) stored by the UE, if the corresponding report configuration (reportConfig) includes a report type (reportType) set to a report CGI (reportCGI), the UE considers that a detected cell with a same physical cell ID as a value of cellForWhichToReportCGI is the target cell.
Step 2: The terminal obtains the system message of the target cell, and makes judgment on the network type of the target cell or determines whether the system message scheduling information of the target cell includes the scheduling of the first system message.

For example, if the system message scheduling information in SIB1 of the target cell does not include scheduling information of NTN-specific SIB, it is determined that the network type of the target cell is TN; or if the system message scheduling information in SIB1 of the target cell includes the scheduling information of NTN-specific SIB, it is determined that the network type of the target cell is NTN.

Specifically, the terminal may determine whether the SIB-Mapping in SchedulingInfo of the SI-SchedulingInfo in SIB1 includes the first system message, so as to determine the network type of the target cell, and the first system message includes satellite assistance information.

Alternatively, for example, if the target cell broadcasts trackingAreaCodeList, it is determined that the network type of the target cell is NTN; and if the target cell broadcasts NTN-specific access control information, it is determined that the network type of the target cell is NTN.

Step 3: If the terminal detects that the network type of the target cell is NTN or the system message scheduling information of the target cell includes the scheduling of the first system message, the terminal does not report the first information.

In other words, the first information is reported only when the terminal detects that the network type of the target cell is TN or when the system message scheduling information of the target cell does not include the scheduling of the first system message.

The terminal may report only the second CGI information, but not the first CGI information, that is, the terminal adds plmn-IdentityList, trackingAreaCode, ranac, cellIdentity, and cellReservedForOperatorUse in each entry of the PLMN-IdentityInfoList of the target cell to the PLMN-IdentityInfoList, and then adds the PLMN-IdentityInfoList, frequencyBandList, and the like to a measurement result and reports the measurement result to the network-side device. Alternatively, the terminal reports neither the second CGI information nor the first CGI information.

Step 4: If detecting that the network type of the target cell is NTN or the system message scheduling information of the target cell includes the scheduling of the first system message, the terminal reports the second information or the third information.

The second information includes at least one of the following:
cell access barred indicator cellBarred;
cell reservation indicator cellReservedForOperatorUse;
cell reserved for other use cell ReservedForOtherUse;
future cell reservation indicator cellReservedForOperatorUse;
first access control information, where the first access control information is used to indicate that the first terminal is allowed or not allowed to access the target cell, and the first terminal is a terminal supporting NTN access; and
first indication information, used for indicating the network type of the target cell, where the first indication information may be explicitly indicated or implicitly indicated. For explicit indication, 1 bit may be used to indicate the network type of the target cell. Specifically, one new indication field is introduced. If a value of this field is true, it means that the cell is an NTN cell, and if the value is false or is absent, it means that the cell is a TN cell; or vice versa. For implicit indication, the network type of the target cell being NTN is implicitly indicated by indicating that the target cell has NTN-specific SIB scheduling; or the network type of the target cell being NTN is implicitly indicated by indicating that the target cell has trackingAreaCodeList or the network type of the target cell being NTN is implicitly indicated by indicating that the target cell has NTN-specific access control information.

The third information includes at least one of the following:
first indication information, used for indicating the network type of the target cell, where the first indication information may be explicitly indicated or implicitly indicated; for explicit indication, 1 bit may be used to indicate the network type of the target cell, specifically, one new indication field is introduced; if a value of this field is true, it means that the cell is an NTN cell, and if the value is false or is absent, it means that the cell is a TN cell; or vice versa; and for implicit indication, the network type of the target cell being NTN is implicitly indicated by indicating that the target cell has NTN-specific SIB scheduling; or the network type of the target cell being NTN is implicitly indicated by indicating that the target cell has trackingAreaCodeList or the network type of the target cell being NTN is implicitly indicated by indicating that the target cell has NTN-specific access control information;
second indication information, used for indicating that the terminal is not allowed to report the first CGI information; for example, 1 bit may be used to indicate the second indication information, specifically, one new indication field is introduced; if a value of this field is true, it means that the terminal is not allowed to report the first CGI information of the target cell, and if the value is false or is absent, it means that the terminal is allowed to report the first CGI information of the target cell; or vice versa;
third indication information, used for indicating that the terminal is not allowed to report the second CGI information; for example, 1 bit may be used to indicate the third indication information, specifically, one new indication field is introduced; if a value of this field is true, it means that the terminal is not allowed to report the second CGI information of the target cell, and if the value is false or is absent, it means that the terminal is allowed to report the second CGI information of the target cell; or vice versa;
fourth indication information, used for indicating that the terminal is not allowed to report the first CGI information and the second CGI information; for example, 1 bit may be used to indicate the fourth indication information, specifically, one new indication field is introduced; if a value of this field is true, it means that the terminal is not allowed to report the first CGI information and the second CGI information of the target cell, and if the value is false or is absent, it means that the terminal is allowed to report the first CGI information and the second CGI information of the target cell; or vice versa;
fifth indication information, used for indicating that the terminal is not allowed to obtain the first CGI information of the target cell; for example, 1 bit may be used to indicate the fifth indication information, specifically, one new indication field is introduced; if a value of this field is true, it means that the terminal is not allowed to obtain the first CGI information of the target cell, and if the value is false or is absent, it means that the terminal is allowed to obtain the first CGI information of the target cell; or vice versa;
sixth indication information, used for indicating that the terminal is not allowed to obtain the second CGI information of the target cell; for example, 1 bit may be used to indicate the sixth indication information, specifically, one new indication field is introduced; if a value of this field is true, it means that the terminal is not allowed to obtain the second CGI information of the target cell, and if the value is false or is absent, it means that the terminal is allowed to obtain the second CGI information of the target cell; or vice versa; and
seventh indication information, used for indicating that the terminal is not allowed to obtain the first CGI information and the second CGI information of the target cell; for example, 1 bit may be used to indicate the seventh indication information, specifically, one new indication field is introduced; if a value of this field is true, it means that the terminal is not allowed to obtain the first CGI information and the second CGI information of the target cell, and if the value is false or is absent, it means that the terminal is allowed to obtain the first CGI information and the second CGI information of the target cell; or vice versa.

The UE behavior related to step 3 and/or step 4 is performed based on network configuration or protocol prescription. If the execution is based on the protocol prescription, it means that the terminal needs to always perform a related behavior. If the execution is based on network configuration, the terminal performs execution when the network configures the terminal to perform execution. For example, the network uses 1 bit to indicate the UE to perform step 3 and/or step 4. When a value of the field is true, it means that the UE performs execution; if the value is false or absent, it means that the UE does not perform execution; or vice versa.

Step 3 may not be performed, and only step 4 is performed, that is, if the terminal detects that the network type of the target cell is NTN or the system message scheduling information of the target cell includes the scheduling of the first system message, the terminal reports the second information or the third information.

Step 4 may not be performed, and only step 3 is performed, that is, if the terminal detects that the network type of the target cell is NTN or the system message scheduling information of the target cell includes the scheduling of the first system message, the terminal reports only the second CGI information, or the terminal reports neither the second CGI information nor the first CGI information, in other words, the terminal reports nothing.

Steps 3 and 4 can both be performed, that is, if the terminal detects that the network type of the target cell is NTN or the system message scheduling information of the target cell includes the scheduling of the first system message, the terminal reports the second CGI information and the second information, or the terminal reports the second CGI information and the third information.

That the terminal reports the second information or the third information may be that the terminal adds the second information or the third information to a measurement result and reports the measurement result to the network-side device.

The first information, the second information, and the third information may be included in a same message or different messages and sent to the network-side device.

In another specific embodiment, the terminal has the capability of reporting NTN-related CGI information, the terminal can obtain NTN-related CGI information of the target cell, and the terminal reports the first information and/or the second information. This embodiment includes the following steps:
Step 1: The terminal obtains target configuration information, where the target configuration information is used to indicate the terminal to report CGI information of a target cell.
Step 2: The terminal obtains the system message of the target cell.
Step 3: The terminal reports the second CGI information, or if the terminal supports to obtain and report CGI information (nr-CGI-Reporting), the terminal reports the second CGI information, where the second CGI information includes at least one piece of fourth information, and the fourth information includes at least one of the following:
   public land mobile network identifier list plmn-IdentityList;
   tracking area code trackingAreaCode;
   radio access network RAN area code ranac;
   cell identity cellIdentity;
   cell reservation indicator cellReservedForOperatorUse; and
   frequency band list frequencyBandList.

Specifically, the terminal may add plmn-IdentityList, trackingAreaCode, ranac, cellIdentity, and cellReservedForOperatorUse in each entry of PLMN-IdentityInfoList of the target cell to the PLMN-IdentityInfoList, and adds the PLMN-IdentityInfoList, frequencyBandList, or the like to a measurement result and reports the measurement result to the network-side device.

The fourth information is information in the entry of the public land mobile network identification information list PLMN-IdentityInfoList broadcast by the target cell.

Step 4: If the terminal supports to obtain and report NTN-related CGI information and the terminal can obtain NTN-related CGI information of the target cell, the terminal reports the NTN-related CGI information (including trackingAreaCodeList) and/or second information.

That is, the terminal reports the first CGI information, where the first CGI information includes at least one piece of fifth information, and the fifth information includes at least one of the following:
public land mobile network identifier list plmn-IdentityList;
tracking area code list trackingAreaCodeList;
radio access network RAN area code ranac;
cell identity cellIdentity;
cell reservation indicator cellReservedForOperatorUse; and
frequency band list frequencyBandList.

The fifth information is information in an entry of a PLMN-IdentityInfoList broadcast by the target cell.

The UE behavior related to step 3 and/or step 4 is performed based on network configuration or protocol prescription. If the execution is based on the protocol prescription, it means that the terminal needs to always perform a related behavior. If the execution is based on network configuration, the terminal performs execution when the network configures the terminal to perform execution. For example, the network uses 1 bit to indicate the UE to perform step 3 and/or step 4. When a value of the field is true, it means that the UE performs execution; if the value is false or absent, it means that the UE does not perform execution; or vice versa.

Step 3 may not be performed, and only step 4 is performed, that is, if the terminal supports to obtain and report NTN-related CGI information and the terminal can obtain NTN-related CGI information of the target cell, the terminal reports only the first CGI information, not reporting the second CGI information, or the terminal reports only the second information, not reporting the second CGI information, or the terminal reports the first CGI information and the second information, not reporting the second CGI information.

Step 4 may not be performed, and only step 3 is performed, that is, if the terminal reports only the second CGI information, or if the terminal supports to obtain and report CGI information (nr-CGI-Reporting), the terminal reports only the second CGI information.

Step 3 and step 4 can both be performed, that is, if the terminal supports to obtain and report NTN-related CGI information and the terminal can obtain NTN-related CGI information of the target cell, the terminal reports the second CGI information and the first CGI information, or the terminal reports the second CGI information and the second information; or the terminal reports the second CGI information, the first CGI information, and the second information.

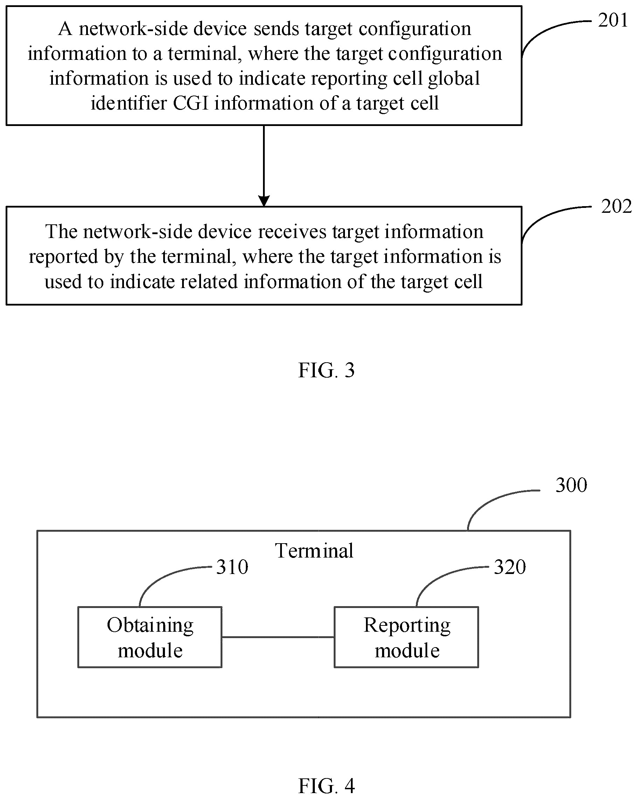

The second CGI information, the first CGI information, and the second information may be included in a same message or different messages and sent to the network-side device. An embodiment of this application further provides an information reporting method, as shown in FIG. 3, including:
Step 201: A network-side device sends target configuration information to a terminal, where the target configuration information is used to indicate reporting cell global identifier CGI information of a target cell.
Step 202: The network-side device receives target information reported by the terminal, where the target information is used to indicate related information of the target cell.

In some embodiments, the target information includes at least one of the following:
first information, where the first information includes first CGI information and/or second CGI information of the target cell;
second information, where the second information is used to indicate access control information of the target cell and/or the network type of the target cell; and
third information, where the third information is used to indicate the network type of the target cell and/or a cause for not reporting the CGI information.

In some embodiments, the target information is carried in a measurement result reported by the terminal.

In some embodiments, the second CGI information includes at least one piece of fourth information, and the fourth information includes at least one of the following:
public land mobile network identifier list plmn-IdentityList;
tracking area code trackingAreaCode;
radio access network RAN area code ranac;
cell identity cellIdentity;
cell reservation indicator cellReservedForOperatorUse; and
frequency band list frequencyBandList.

The first CGI information includes at least one piece of fifth information, and the fifth information includes at least one of the following:
public land mobile network identifier list plmn-IdentityList;
tracking area code list trackingAreaCodeList;
radio access network RAN area code ranac;
cell identity cellIdentity;
cell reservation indicator cellReservedForOperatorUse; and
frequency band list frequencyBandList.

The fourth information is information in an entry (entry) of a public land mobile network identification information list PLMN-IdentityInfoList broadcast by the target cell, and the fifth information is information in the entry of PLMN-IdentityInfoList broadcast by the target cell.

In some embodiments, the second information includes at least one of the following:
cell access barred indicator cellBarred;
cell reservation indicator cellReservedForOperatorUse;
cell reserved for other use cell ReservedForOtherUse;
future cell reservation indicator cellReservedForOperatorUse;
first access control information, where the first access control information is used to indicate that the first terminal is allowed or not allowed to access the target cell, and the first terminal is a terminal supporting NTN access; and
first indication information, used for indicating the network type of the target cell, where the first indication information may explicitly or implicitly make indication; for explicit indication, 1 bit may be used to indicate the network type of the target cell; specifically, one new indication field is introduced; if a value of this field is true, it means that the cell is an NTN cell, and if the value is false or is absent, it means that the cell is a TN cell; or vice versa; for implicit indication, the network type of the target cell being NTN is implicitly indicated by indicating that the target cell has NTN-specific SIB scheduling; or the network type of the target cell being NTN is implicitly indicated by indicating that the target cell has trackingAreaCodeList or the network type of the target cell being NTN is implicitly indicated by indicating that the target cell has NTN-specific access control information.

In some embodiments, the third information includes at least one of the following:
first indication information, used for indicating the network type of the target cell, where the first indication information may explicitly or implicitly make indication; for explicit indication, 1 bit may be used to indicate the network type of the target cell. Specifically, one new indication field is introduced; if a value of this field is true, it means that the cell is an NTN cell, and if the value is false or is absent, it means that the cell is a TN cell; or vice versa; for implicit indication, the network type of the target cell being NTN is implicitly indicated by indicating that the target cell has NTN-specific SIB scheduling; or the network type of the target cell being NTN is implicitly indicated by indicating that the target cell has trackingAreaCodeList or the network type of the target cell being NTN is implicitly indicated by indicating that the target cell has NTN-specific access control information;
second indication information, used for indicating that the terminal is not allowed to report the first CGI information; for example, 1 bit may be used to indicate the second indication information, specifically, one new indication field is introduced; if a value of this field is true, it means that the terminal is not allowed to report the first CGI information of the target cell, and if the value is false or is absent, it means that the terminal is allowed to report the first CGI information of the target cell; or vice versa;
third indication information, used for indicating that the terminal is not allowed to report the second CGI information; for example, 1 bit may be used to indicate the third indication information, specifically, one new indication field is introduced; if a value of this field is true, it means that the terminal is not allowed to report the second CGI information of the target cell, and if the value is false or is absent, it means that the terminal is allowed to report the second CGI information of the target cell; or vice versa;
fourth indication information, used for indicating that the terminal is not allowed to report the first CGI information and the second CGI information; for example, 1 bit may be used to indicate the fourth indication information, specifically, one new indication field is introduced; if a value of this field is true, it means that the terminal is not allowed to report the first CGI information and the second CGI information of the target cell, and if the value is false or is absent, it means that the terminal is allowed to report the first CGI information and the second CGI information of the target cell; or vice versa;
fifth indication information, used for indicating that the terminal is not allowed to obtain the first CGI information of the target cell; for example, 1 bit may be used to indicate the fifth indication information, specifically, one new indication field is introduced; if a value of this field is true, it means that the terminal is not allowed to obtain the first CGI information of the target cell, and if the value is false or is absent, it means that the terminal is allowed to obtain the first CGI information of the target cell; or vice versa;
sixth indication information, used for indicating that the terminal is not allowed to obtain the second CGI information of the target cell; for example, 1 bit may be used to indicate the sixth indication information, specifically, one new indication field is introduced; if a value of this field is true, it means that the terminal is not allowed to obtain the second CGI information of the target cell, and if the value is false or is absent, it means that the terminal is allowed to obtain the second CGI information of the target cell; or vice versa; and
seventh indication information, used for indicating that the terminal is not allowed to obtain the first CGI information and the second CGI information of the target cell; for example, 1 bit may be used to indicate the seventh indication information, specifically, one new indication field is introduced; if a value of this field is true, it means that the terminal is not allowed to obtain the first CGI information and the second CGI information of the target cell, and if the value is false or is absent, it means that the terminal is allowed to obtain the first CGI information and the second CGI information of the target cell; or vice versa.

In some embodiments, the method further includes:
sending, by the network-side device, a tracking area code list trackingAreaCodeList to a first network-side device, where the trackingAreaCodeList is associated with all PLMN identifiers in the public land mobile network identity information PLMN-IdentityInfo. PLMN-IdentityInfo is defined by the protocol or configured by the network-side device, and the first network-side device is a network-side device other than the network-side device.

The network-side device may be an NG-RAN node or AMF. For example, NG-RAN node 1 and NG-RAN node 2 can perform interaction through an Xn interface, for example, in the NG-RAN node Configuration Update procedure, trackingAreaCodeList is carried by an NG-RAN NODE CONFIGURATION UPDATE message and an NG-RAN NODE CONFIGURATION UPDATE ACKNOWLEDGE message. For another example, the NG-RAN node and AMF can perform interaction through an NG interface, for example, trackingAreaCodeList is carried by an NG SETUP REQUEST message.

In some embodiments, the method further includes:
receiving, by the network-side device, a trackingAreaCodeList sent by a first network-side device; and
ignoring, by the network-side device, a tracking area code trackingAreaCode sent by the first network-side device, where the trackingAreaCode is associated with a PLMN identifier in the PLMN-IdentityInfo, and the PLMN-IdentityInfo is defined by the protocol or configured by the network-side device.

For the information reporting method provided in the embodiments of this application, the execution subject may be an information reporting apparatus. In the embodiments of this application, the information reporting method being performed by the information reporting apparatus is used as an example to describe the information reporting apparatus provided in the embodiments of this application.

An embodiment of this application provides an information reporting apparatus, as shown in FIG. 4, applied to a terminal 300 and including:
an obtaining module 310, configured to obtain target configuration information, where the target configuration information is used to indicate reporting cell global identifier CGI information of a target cell; and
a reporting module 320, configured to report target information based on at least one of the following:
   a network type of the target cell;
   system message scheduling information of the target cell; and
   a capability of the terminal; where
   the target information is used to indicate related information of the target cell.

In this embodiment of this application, the terminal can report the related information of the target cell to the network-side device based on the network type of the target cell, the system message scheduling information of the target cell, and the capability of the terminal. In this way, if the terrestrial network configures the terminal to report CGI information of an NTN cell to implement neighboring cell management, the terminal may not report the CGI information of the target cell or indicates that the target cell on the network side is an NTN cell, thereby improving accuracy of managing a neighboring cell relation by the base station.

In some embodiments, the target information includes at least one of the following:
first information, where the first information includes first CGI information and/or second CGI information of the target cell;
second information, where the second information is used to indicate access control information of the target cell and/or the network type of the target cell; and
third information, where the third information is used to indicate the network type of the target cell and/or a cause for not reporting the CGI information.

In some embodiments, the capability of the terminal includes at least one of the following:
supporting non-terrestrial network NTN access, and not supporting to obtain and report NTN-related CGI information;
supporting NTN access, and supporting to obtain and report NTN-related CGI information;
supporting terrestrial network TN access, and not supporting to obtain and report NTN-related CGI information; and
supporting TN access, and supporting to obtain and report NTN-related CGI information.

In some embodiments, the supporting to obtain and report the NTN-related CGI information includes: the terminal supports to obtain NTN-related CGI information from an intra-frequency neighboring cell or inter-frequency neighboring cell and report the obtained NTN-related CGI information; or
the not supporting to obtain and report the NTN-related CGI information includes: the terminal does not support to obtain NTN-related CGI information from an intra-frequency neighboring cell or inter-frequency neighboring cell and report the obtained NTN-related CGI information; where
a network type of the intra-frequency neighboring cell is NTN, a network type of the inter-frequency neighboring cell is NTN, and the terminal obtains the NTN-related CGI information by reading a system message of the neighboring cell.

In some embodiments, the reporting module 320 is configured to perform at least one of the following:
in a case that the terminal detects the network type of the target cell being NTN, the target information does not include the first CGI information or the second CGI information, or the target information does not include the first CGI information;
in a case that the terminal detects the system message scheduling information of the target cell including scheduling of a first system message, the target information does not include the first CGI information or the second CGI information, or the target information does not include the first CGI information; where a system information block SIB1 of the target cell includes the system message scheduling information, and the first system message includes satellite assistance information;
in a case that the terminal supports to obtain and report NTN-related CGI information and the terminal obtains the first CGI information, the target information includes the first CGI information, or the target information includes the first CGI information and the second CGI information; and
in a case that the terminal supports to obtain and report CGI information, the target information includes the second CGI information.

In some embodiments, in a case that the terminal detects the network type of the target cell being NTN, or the terminal detects that the system message scheduling information of the target cell includes the scheduling of the first system message, the target information includes second information or third information, and the first system message includes the satellite assistance information.

In some embodiments, in a case that the terminal supports to obtain and report the NTN-related CGI information and the terminal obtains the first CGI information, the target information includes second information; and/or
in a case that the terminal supports to obtain and report CGI information, the target information includes the second information.

In some embodiments, the reporting module 320 is configured to perform at least one of the following:
in a case that the system message scheduling information of the target cell does not include the scheduling of the first system message, determining that the network type of the target cell is TN; where the system information block SIB 1 of the target cell includes the system message scheduling information, and the first system message includes the satellite assistance information;
in a case that the system message scheduling information of the target cell includes the scheduling of the first system message, determining that the network type of the target cell is NTN; where the system information block SIB 1 of the target cell includes the system message scheduling information, and the first system message includes the satellite assistance information;
in a case that the target cell broadcasts the first CGI information, determining that the network type of the target cell is NTN; and
in a case that the target cell broadcasts first access control information, determining that the network type of the target cell is NTN, where the first access control information is used to indicate that the first terminal is allowed or not allowed to access the target cell, and the first terminal is a terminal supporting NTN access.

In some embodiments, the target information is carried in a measurement result reported by the terminal.

In some embodiments, the second CGI information includes at least one piece of fourth information, and the fourth information includes at least one of the following:
public land mobile network identifier list plmn-IdentityList;
tracking area code trackingAreaCode;
radio access network RAN area code ranac;
cell identity cellIdentity;
cell reservation indicator cellReservedForOperatorUse; and
frequency band list frequencyBandList.

The first CGI information includes at least one piece of fifth information, and the fifth information includes at least one of the following:
public land mobile network identifier list plmn-IdentityList;
tracking area code list trackingAreaCodeList;
radio access network RAN area code ranac;
cell identity cellIdentity;
cell reservation indicator cellReservedForOperatorUse; and
frequency band list frequencyBandList; where
the fourth information is information in an entry (entry) of a public land mobile network identification information list PLMN-IdentityInfoList broadcast by the target cell, and the fifth information is information in the entry of PLMN-IdentityInfoList broadcast by the target cell.

In some embodiments, the second information includes at least one of the following:
cell access barred indicator cellBarred;
cell reservation indicator cellReservedForOperatorUse;
cell reserved for other use cell ReservedForOtherUse;
future cell reservation indicator cellReservedForOperatorUse;
first access control information, where the first access control information is used to indicate that the first terminal is allowed or not allowed to access the target cell, and the first terminal is a terminal supporting NTN access; and
first indication information, used for indicating the network type of the target cell.

In some embodiments, the third information includes at least one of the following:
first indication information, used for indicating the network type of the target cell;
second indication information, used for indicating that the terminal is not allowed to report the first CGI information;
third indication information, used for indicating that the terminal is not allowed to report the second CGI information;
fourth indication information, used for indicating that the terminal is not allowed to report the first CGI information and the second CGI information;
fifth indication information, used for indicating that the terminal is not allowed to obtain the first CGI information of the target cell;
sixth indication information, used for indicating that the terminal is not allowed to obtain the second CGI information of the target cell; and
seventh indication information, used for indicating that the terminal is not allowed to obtain the first CGI information and the second CGI information of the target cell.

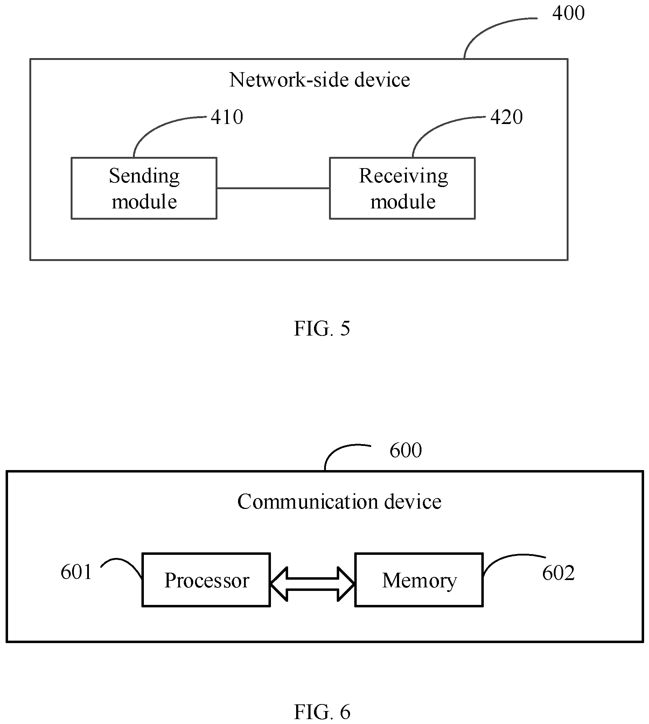

An embodiment of this application provides an information reporting apparatus, as shown in FIG. 5, applied to a network-side device 400 and including:
a sending module 410, configured to send target configuration information to a terminal, where the target configuration information is used to indicate reporting cell global identifier CGI information of a target cell; and
a receiving module 420, configured to receive target information reported by the terminal, where the target information is used to indicate related information of the target cell.

In some embodiments, the target information is carried in a measurement result reported by the terminal.

In some embodiments, the second CGI information includes at least one piece of fourth information, and the fourth information includes at least one of the following:
public land mobile network identifier list plmn-IdentityList;
tracking area code trackingAreaCode;
radio access network RAN area code ranac;
cell identity cellIdentity;
cell reservation indicator cellReservedForOperatorUse; and
frequency band list frequencyBandList.

The first CGI information includes at least one piece of fifth information, and the fifth information includes at least one of the following:
public land mobile network identifier list plmn-IdentityList;
tracking area code list trackingAreaCodeList;
radio access network RAN area code ranac;
cell identity cellIdentity;
cell reservation indicator cellReservedForOperatorUse; and
frequency band list frequencyBandList.

The fourth information is information in an entry (entry) of a public land mobile network identification information list PLMN-IdentityInfoList broadcast by the target cell, and the fifth information is information in the entry of PLMN-IdentityInfoList broadcast by the target cell.

In some embodiments, the second information includes at least one of the following:
cell access barred indicator cellBarred;
cell reservation indicator cellReservedForOperatorUse;
cell reserved for other use cell ReservedForOtherUse;
future cell reservation indicator cellReservedForOperatorUse;
first access control information, where the first access control information is used to indicate that the first terminal is allowed or not allowed to access the target cell, and the first terminal is a terminal supporting NTN access; and
first indication information, used for indicating the network type of the target cell.

In some embodiments, the third information includes at least one of the following:
first indication information, used for indicating the network type of the target cell;
second indication information, used for indicating that the terminal is not allowed to report the first CGI information;
third indication information, used for indicating that the terminal is not allowed to report the second CGI information;
fourth indication information, used for indicating that the terminal is not allowed to report the first CGI information and the second CGI information;
fifth indication information, used for indicating that the terminal is not allowed to obtain the first CGI information of the target cell;
sixth indication information, used for indicating that the terminal is not allowed to obtain the second CGI information of the target cell; and
seventh indication information, used for indicating that the terminal is not allowed to obtain the first CGI information and the second CGI information of the target cell.

In some embodiments, the sending module 410 is further configured to send a tracking area code list trackingAreaCodeList to the first network-side device, where the trackingAreaCodeList is associated with all PLMN identifiers in the PLMN-IdentityInfo, and the PLMN-IdentityInfo is defined by the protocol or configured by the network-side device.

In some embodiments, the receiving module 420 is further configured to receive a trackingAreaCodeList sent by the first network-side device; and ignore a tracking area code trackingAreaCode sent by the first network-side device, where the trackingAreaCode is associated with a PLMN identifier in the PLMN-IdentityInfo, and the PLMN-IdentityInfo is defined by the protocol or configured by the network-side device.

The information reporting apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The information reporting apparatus provided in this embodiment of this application is capable of implementing the processes implemented in the method embodiments in FIG. 2 and FIG. 3, with the same technical effects achieved. To avoid repetition, details are not described herein again.

Optionally, as shown in FIG. 6, an embodiment of this application further provides a communication device 600, including a processor 601 and a memory 602, and a program or instruction capable of running on the processor 601 is stored in the memory 602. For example, when the communication device 600 is a network-side device and when the program or instruction is executed by the processor 601, the steps of the foregoing embodiments of the information reporting method are implemented, with the same technical effects achieved. When the communication device 600 is a terminal and when the program or instruction is executed by the processor 601, the steps of the foregoing information reporting method embodiments are implemented, with the same technical effects achieved. To avoid repetition, details are not described herein.

An embodiment of this application further provides a network-side device, where the network-side device includes a processor and a memory, and a program or instruction capable of running on the processor is stored in the memory. When the program or instruction is executed by the processor, the steps of the foregoing information reporting method embodiments are implemented.

An embodiment of this application further provides a network-side device, including a processor and a communication interface, where the communication interface is configured to: send target configuration information to a terminal, where the target configuration information is used to indicate reporting cell global identifier CGI information of a target cell; and receive target information reported by the terminal, where the target information is used to indicate related information of the target cell.

An embodiment of this application further provides a terminal, where the terminal includes a processor and a memory, and a program or instruction capable of running on the processor is stored in the memory. When the program or instruction is executed by the processor, the steps of the foregoing information reporting method embodiments are implemented.

An embodiment of this application further provides a terminal, including a processor and a communication interface, where the communication interface is configured to obtain target configuration information, where the target configuration information is used to indicate reporting cell global identifier CGI information of a target cell; and report target information based on at least one of the following:
a network type of the target cell;
system message scheduling information of the target cell; and
a capability of the terminal; where
the target information is used to indicate related information of the target cell.

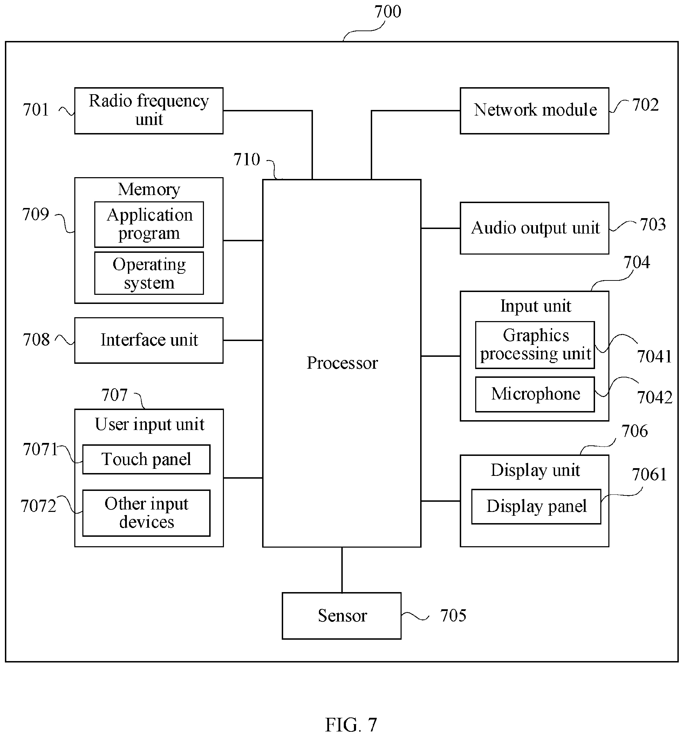

An embodiment of this application further provides a terminal, including a processor and a communication interface. The terminal embodiment corresponds to the foregoing terminal-side method embodiment, and each implementation process and implementation of the foregoing method embodiments can be applied to the terminal embodiment, with the same technical effect achieved. Specifically, FIG. 7 is a schematic diagram of a hardware structure of a terminal for implementing the embodiments of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instruction and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. The application processor primarily processes operations involving an operating system, user interfaces, application programs, and the like. The modem processor primarily processes radio communication signals, for example, being a baseband processor. It can be understood that the modem processor may alternatively be not integrated in the processor 710.

In some embodiments, the processor 710 is configured to obtain target configuration information, where the target configuration information is used to indicate reporting cell global identifier CGI information of a target cell; and report target information based on at least one of the following:
a network type of the target cell;
system message scheduling information of the target cell; and
a capability of the terminal; where
the target information is used to indicate related information of the target cell.

In this embodiment of this application, the terminal can report the related information of the target cell to the network-side device based on the network type of the target cell, the system message scheduling information of the target cell, and the capability of the terminal. In this way, if the terrestrial network configures the terminal to report CGI information of an NTN cell to implement neighboring cell management, the terminal may not report the CGI information of the target cell or indicates that the target cell on the network side is an NTN cell, thereby improving accuracy of managing a neighboring cell relation by the base station.

In some embodiments, the target information includes at least one of the following:
first information, where the first information includes first CGI information and/or second CGI information of the target cell;
second information, where the second information is used to indicate access control information of the target cell and/or the network type of the target cell; and
third information, where the third information is used to indicate the network type of the target cell and/or a cause for not reporting the CGI information.

In some embodiments, the capability of the terminal includes at least one of the following:
supporting non-terrestrial network NTN access, and not supporting to obtain and report NTN-related CGI information;
supporting NTN access, and supporting to obtain and report NTN-related CGI information;
supporting terrestrial network TN access, and not supporting to obtain and report NTN-related CGI information; and
supporting TN access, and supporting to obtain and report NTN-related CGI information.

In some embodiments, the supporting to obtain and report the NTN-related CGI information includes: the terminal supports to obtain NTN-related CGI information from an intra-frequency neighboring cell or inter-frequency neighboring cell and report the obtained NTN-related CGI information; or
the not supporting to obtain and report the NTN-related CGI information includes: the terminal does not support to obtain NTN-related CGI information from an intra-frequency neighboring cell or inter-frequency neighboring cell and report the obtained NTN-related CGI information; where
a network type of the intra-frequency neighboring cell is NTN, a network type of the inter-frequency neighboring cell is NTN, and the terminal obtains the NTN-related CGI information by reading a system message of the neighboring cell.

In some embodiments, the processor 710 is configured to perform at least one of the following:
in a case that the terminal detects the network type of the target cell being NTN, the target information does not include the first CGI information or the second CGI information, or the target information does not include the first CGI information;
in a case that the terminal detects the system message scheduling information of the target cell including scheduling of a first system message, the target information does not include the first CGI information or the second CGI information, or the target information does not include the first CGI information; where a system information block SIB1 of the target cell includes the system message scheduling information, and the first system message includes satellite assistance information;
in a case that the terminal supports to obtain and report NTN-related CGI information and the terminal obtains the first CGI information, the target information includes the first CGI information, or the target information includes the first CGI information and the second CGI information; and
in a case that the terminal supports to obtain and report CGI information, the target information includes the second CGI information.

In some embodiments, in a case that the terminal detects the network type of the target cell being NTN, or the terminal detects that the system message scheduling information of the target cell includes the scheduling of the first system message, the target information includes second information or third information, and the first system message includes the satellite assistance information.

In some embodiments, in a case that the terminal supports to obtain and report the NTN-related CGI information and the terminal obtains the first CGI information, the target information includes second information; and/or
in a case that the terminal supports to obtain and report CGI information, the target information includes the second information.

In some embodiments, the processor 710 is configured to perform at least one of the following:
in a case that the system message scheduling information of the target cell does not include the scheduling of the first system message, determining that the network type of the target cell is TN; where the system information block SIB 1 of the target cell includes the system message scheduling information, and the first system message includes the satellite assistance information;
in a case that the system message scheduling information of the target cell includes the scheduling of the first system message, determining that the network type of the target cell is NTN; where the system information block SIB 1 of the target cell includes the system message scheduling information, and the first system message includes the satellite assistance information;
in a case that the target cell broadcasts the first CGI information, determining that the network type of the target cell is NTN; and
in a case that the target cell broadcasts first access control information, determining that the network type of the target cell is NTN, where the first access control information is used to indicate that the first terminal is allowed or not allowed to access the target cell, and the first terminal is a terminal supporting NTN access.

In some embodiments, the target information is carried in a measurement result reported by the terminal.

In some embodiments, the second CGI information includes at least one piece of fourth information, and the fourth information includes at least one of the following:
public land mobile network identifier list plmn-IdentityList;
tracking area code trackingAreaCode;
radio access network RAN area code ranac;
cell identity cellIdentity;
cell reservation indicator cellReservedForOperatorUse; and
frequency band list frequencyBandList.

The first CGI information includes at least one piece of fifth information, and the fifth information includes at least one of the following:
public land mobile network identifier list plmn-IdentityList;
tracking area code list trackingAreaCodeList;
radio access network RAN area code ranac;
cell identity cellIdentity;
cell reservation indicator cellReservedForOperatorUse; and
frequency band list frequencyBandList.

The fourth information is information in an entry (entry) of a public land mobile network identification information list PLMN-IdentityInfoList broadcast by the target cell, and the fifth information is information in the entry of PLMN-IdentityInfoList broadcast by the target cell.

In some embodiments, the second information includes at least one of the following:
cell access barred indicator cellBarred;
cell reservation indicator cellReservedForOperatorUse;
cell reserved for other use cell ReservedForOtherUse;
future cell reservation indicator cellReservedForOperatorUse;
first access control information, where the first access control information is used to indicate that the first terminal is allowed or not allowed to access the target cell, and the first terminal is a terminal supporting NTN access; and
first indication information, used for indicating the network type of the target cell.

In some embodiments, the third information includes at least one of the following:
first indication information, used for indicating the network type of the target cell;
second indication information, used for indicating that the terminal is not allowed to report the first CGI information;
third indication information, used for indicating that the terminal is not allowed to report the second CGI information;
fourth indication information, used for indicating that the terminal is not allowed to report the first CGI information and the second CGI information;
fifth indication information, used for indicating that the terminal is not allowed to obtain the first CGI information of the target cell;
sixth indication information, used for indicating that the terminal is not allowed to obtain the second CGI information of the target cell; and
seventh indication information, used for indicating that the terminal is not allowed to obtain the first CGI information and the second CGI information of the target cell.

An embodiment of this application further provides a network-side device, including a processor and a communication interface. The network-side device embodiments correspond to the foregoing network-side device method embodiments, and the implementation processes and implementations of the foregoing method embodiments can be applied to the network-side device embodiments, with the same technical effects achieved.

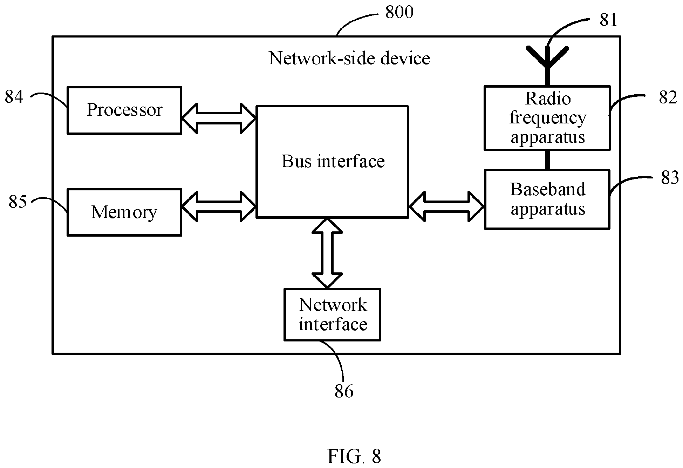

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method executed by the network-side device in the foregoing embodiments can be implemented in the baseband apparatus 83, and the baseband apparatus 83 includes a baseband processor.

The baseband apparatus 83 may include, for example, at least one baseband board, where a plurality of chips are disposed on the baseband board. As shown in FIG. 8, one of the chips is, for example, a baseband processor, and is connected to the memory 85 through the bus interface, to invoke a program in the memory 85 to perform the operations of the network device shown in the foregoing method embodiments.

The network-side device may further include a network interface 86, where the interface is, for example, a common public radio interface (Common Public Radio Interface, CPRI).

Specifically, the network-side device 800 in this embodiment of the present invention further includes: an instruction or program stored in the memory 85 and capable of running on the processor 84. The processor 84 invokes the instruction or program in the memory 85 to execute the information reporting method described above, with the same technical effects achieved. To avoid repetition, details are not repeated herein.

An embodiment of this application further provides a readable storage medium, where a program or instruction is stored in the readable storage medium. When the program or instruction is executed by a processor, the processes of the foregoing embodiment of the information reporting method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instruction to implement the processes of the foregoing embodiment of the information reporting method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing information reporting method embodiments, with the same technical effects achieved. To avoid repetition, details are not repeated herein. An embodiment of this application further provides an information reporting system, including a network-side device and a terminal, where the network-side device can be configured to execute the steps of the embodiments of the information reporting method described above, and the terminal can be configured to execute the steps of the information reporting method described above.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separated. A component displayed as a unit may be or may not be a physical unit, that is may be located in one place, or may be distributed in a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the method described in the embodiments of the present disclosure. The foregoing storage medium includes: any medium that can store program code, such as a USB flash drive, a removable hard disk, a ROM, a RAM, a magnetic disk, or an optical disc.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information reporting method, comprising:
obtaining, by a terminal, target configuration information, wherein the target configuration information is used to indicate reporting cell global identifier CGI information of a target cell; and
reporting, by the terminal, target information based on at least one of the following:
a network type of the target cell;
system message scheduling information of the target cell; and
a capability of the terminal; wherein
the target information is used to indicate related information of the target cell.

2. The method according to claim 1, wherein the target information comprises at least one of the following:
first information, wherein the first information comprises first CGI information and/or second CGI information of the target cell;
second information, wherein the second information is used to indicate access control information of the target cell and/or the network type of the target cell; and
third information, wherein the third information is used to indicate the network type of the target cell and/or a cause for not reporting the CGI information.

3. The method according to claim 2, wherein the capability of the terminal comprises at least one of the following:
supporting non-terrestrial network NTN access, and not supporting to obtain and report NTN-related CGI information;
supporting NTN access, and supporting to obtain and report NTN-related CGI information;
supporting terrestrial network TN access, and not supporting to obtain and report NTN-related CGI information; and
supporting TN access, and supporting to obtain and report NTN-related CGI information.

4. The method according to claim 3, wherein the supporting to obtain and report the NTN-related CGI information comprises: the terminal supports to obtain NTN-related CGI information from an intra-frequency neighboring cell or inter-frequency neighboring cell and report the obtained NTN-related CGI information; or
the not supporting to obtain and report the NTN-related CGI information comprises: the terminal does not support to obtain NTN-related CGI information from an intra-frequency neighboring cell or inter-frequency neighboring cell and report the obtained NTN-related CGI information; wherein
a network type of the intra-frequency neighboring cell is NTN, a network type of the inter-frequency neighboring cell is NTN, and the terminal obtains the NTN-related CGI information by reading a system message of the neighboring cell.

5. The method according to claim 2, wherein the target information reported by the terminal comprises at least one of the following:
in a case that the terminal detects the network type of the target cell being NTN, the target information does not comprise the first CGI information or the second CGI information, or the target information does not comprise the first CGI information;
in a case that the terminal detects the system message scheduling information of the target cell comprising scheduling of a first system message, the target information does not comprise the first CGI information or the second CGI information, or the target information does not comprise the first CGI information; wherein a system information block SIB1 of the target cell comprises the system message scheduling information, and the first system message comprises satellite assistance information;
in a case that the terminal supports to obtain and report NTN-related CGI information and the terminal obtains the first CGI information, the target information comprises the first CGI information, or the target information comprises the first CGI information and the second CGI information; and
in a case that the terminal supports to obtain and report CGI information, the target information comprises the second CGI information.

6. The method according to claim 5, wherein in a case that the terminal detects the network type of the target cell being NTN, or the terminal detects that the system message scheduling information of the target cell comprises the scheduling of the first system message, the target information comprises second information or third information, and the first system message comprises the satellite assistance information.

7. The method according to claim 5, wherein in a case that the terminal supports to obtain and report the NTN-related CGI information and the terminal obtains the first CGI information, the target information comprises second information.

8. The method according to claim 5, wherein in a case that the terminal supports to obtain and report the CGI information, the target information comprises second information.

9. The method according to claim 5, wherein that the terminal detects that the network type of the target cell comprises at least one of the following:
in a case that the system message scheduling information of the target cell does not comprise the scheduling of the first system message, determining that the network type of the target cell is TN; wherein the system information block SIB1 of the target cell comprises the system message scheduling information, and the first system message comprises the satellite assistance information;
in a case that the system message scheduling information of the target cell comprises the scheduling of the first system message, determining that the network type of the target cell is NTN; wherein the system information block SIB1 of the target cell comprises the system message scheduling information, and the first system message comprises the satellite assistance information;
in a case that the target cell broadcasts the first CGI information, determining that the network type of the target cell is NTN; and
in a case that the target cell broadcasts first access control information, determining that the network type of the target cell is NTN, wherein the first access control information is used to indicate that the first terminal is allowed or not allowed to access the target cell, and the first terminal is a terminal supporting NTN access.

10. The method according to any one of claims 1 to 9, wherein the target information is carried in a measurement result reported by the terminal.

11. The method according to any one of claims 1 to 9, wherein the second CGI information comprises at least one piece of fourth information, and the fourth information comprises at least one of the following:
public land mobile network identifier list plmn-IdentityList;
tracking area code trackingAreaCode;
radio access network RAN area code ranac;
cell identity cellIdentity;
cell reservation indicator cellReservedForOperatorUse; and
frequency band list frequencyBandList; and
the first CGI information comprises at least one piece of fifth information, and the fifth information comprises at least one of the following:
public land mobile network identifier list plmn-IdentityList;
tracking area code list trackingAreaCodeList;
radio access network RAN area code ranac;
cell identity cellIdentity;
cell reservation indicator cellReservedForOperatorUse; and
frequency band list frequencyBandList; wherein
the fourth information is information in an entry (entry) of a public land mobile network identification information list PLMN-IdentityInfoList broadcast by the target cell, and the fifth information is information in the entry of PLMN-IdentityInfoList broadcast by the target cell.

12. The method according to any one of claims 1 to 9, wherein the second information comprises at least one of the following:
cell access barred indicator cellBarred;
cell reservation indicator cellReservedForOperatorUse;
cell reserved for other use cell ReservedForOtherUse;
future cell reservation indicator cellReservedForOperatorUse;
first access control information, wherein the first access control information is used to indicate that the first terminal is allowed or not allowed to access the target cell, and the first terminal is a terminal supporting NTN access; and
first indication information, used for indicating the network type of the target cell.

13. The method according to any one of claims 1 to 9, wherein the third information comprises at least one of the following:
first indication information, used for indicating the network type of the target cell;
second indication information, used for indicating that the terminal is not allowed to report the first CGI information;
third indication information, used for indicating that the terminal is not allowed to report the second CGI information;
fourth indication information, used for indicating that the terminal is not allowed to report the first CGI information and the first CGI information;
fifth indication information, used for indicating that the terminal is not allowed to obtain the first CGI information of the target cell;
sixth indication information, used for indicating that the terminal is not allowed to obtain the second CGI information of the target cell; and
seventh indication information, used for indicating that the terminal is not allowed to obtain the first CGI information and the second CGI information of the target cell.

14. An information reporting method, comprising:
sending, by a network-side device, target configuration information to a terminal, wherein the target configuration information is used to indicate reporting cell global identifier CGI information of a target cell; and
receiving, by the network-side device, target information reported by the terminal, wherein the target information is used to indicate related information of the target cell.

15. The method according to claim 14, wherein the target information comprises at least one of the following:
first information, wherein the first information comprises first CGI information and/or second CGI information of the target cell;
second information, wherein the second information is used to indicate access control information of the target cell and/or the network type of the target cell; and
third information, wherein the third information is used to indicate the network type of the target cell and/or a cause for not reporting the CGI information.

16. The method according to claim 14, wherein the target information is carried in a measurement result reported by the terminal.

17. The method according to claim 15, wherein the second CGI information comprises at least one piece of fourth information, and the fourth information comprises at least one of the following:
public land mobile network identifier list plmn-IdentityList;
tracking area code trackingAreaCode;
radio access network RAN area code ranac;
cell identity cellIdentity;
cell reservation indicator cellReservedForOperatorUse; and
frequency band list frequencyBandList; and
the first CGI information comprises at least one piece of fifth information, and the fifth information comprises at least one of the following:
public land mobile network identifier list plmn-IdentityList;
tracking area code list trackingAreaCodeList;
radio access network RAN area code ranac;
cell identity cellIdentity;
cell reservation indicator cellReservedForOperatorUse; and
frequency band list frequencyBandList; wherein
the fourth information is information in an entry (entry) of a public land mobile network identification information list PLMN-IdentityInfoList broadcast by the target cell, and the fifth information is information in the entry of PLMN-IdentityInfoList broadcast by the target cell.

18. The method according to claim 15, wherein the second information comprises at least one of the following:
cell access barred indicator cellBarred;
cell reservation indicator cellReservedForOperatorUse;
cell reserved for other use cell ReservedForOtherUse;
future cell reservation indicator cellReservedForOperatorUse;
first access control information, wherein the first access control information is used to indicate that the first terminal is allowed or not allowed to access the target cell, and the first terminal is a terminal supporting NTN access; and
first indication information, used for indicating the network type of the target cell.

19. The method according to claim 15, wherein the third information comprises at least one of the following:
first indication information, used for indicating the network type of the target cell;
second indication information, used for indicating that the terminal is not allowed to report the first CGI information;
third indication information, used for indicating that the terminal is not allowed to report the second CGI information;
fourth indication information, used for indicating that the terminal is not allowed to report the first CGI information and the first CGI information;
fifth indication information, used for indicating that the terminal is not allowed to obtain the first CGI information of the target cell;
sixth indication information, used for indicating that the terminal is not allowed to obtain the second CGI information of the target cell; and
seventh indication information, used for indicating that the terminal is not allowed to obtain the first CGI information and the second CGI information of the target cell.

20. The method according to any one of claims 14 to 19, wherein the method further comprises:
sending, by the network-side device, a tracking area code list trackingAreaCodeList to a first network-side device, wherein the trackingAreaCodeList is associated with all PLMN identifiers in the public land mobile network identity information PLMN-IdentityInfo.

21. The method according to any one of claims 14 to 19, wherein the method further comprises:
receiving, by the network-side device, a trackingAreaCodeList sent by a first network-side device; and
ignoring, by the network-side device, a tracking area code trackingAreaCode sent by the first network-side device, wherein the trackingAreaCode is associated with a PLMN identifier in the PLMN-IdentityInfo.

22. An information reporting apparatus, comprising:
an obtaining module, configured to obtain target configuration information, wherein the target configuration information is used to indicate reporting cell global identifier CGI information of a target cell; and
a reporting module, configured to report target information based on at least one of the following:
a network type of the target cell;
system message scheduling information of the target cell; and
a capability of the terminal; wherein
the target information is used to indicate related information of the target cell.

23. An information reporting apparatus, comprising:
a sending module, configured to send target configuration information to a terminal, wherein the target configuration information is used to indicate reporting cell global identifier CGI information of a target cell; and
a receiving module, configured to receive target information reported by the terminal, wherein the target information is used to indicate related information of the target cell.

24. A terminal, comprising a processor and a memory, wherein a program or instruction capable of running on the processor is stored in the memory, and when the program or instruction is executed by the processor, the steps of the information reporting method according to any one of claims 1 to 13 are implemented.

25. A network-side device, comprising a processor and a memory, wherein the memory stores a program or instruction capable of running on the processor, wherein when the program or instruction is executed by the processor, the steps of the information reporting method according to any one of claims 14 to 21 are implemented.

26. A readable storage medium, wherein the readable storage medium stores a program or instruction, and when the program or instruction is executed by a processor, the steps of the information reporting method according to any one of claims 1 to 13 are implemented, or the steps of the information reporting method according to any one of claims 14 to 21 are implemented.
